(19) Europäisches Patentamt European Patent Office Office européen des brevets

(11) **EP 3 100 781 B1**

(12) **EUROPEAN PATENT SPECIFICATION**

(45) Date of publication and mention
of the grant of the patent:
**31.10.2018 Bulletin 2018/44**

(51) Int Cl.:
***B01D 53/50*** *(2006.01)*    ***B01D 53/79*** *(2006.01)*
***F23J 15/04*** *(2006.01)*

(21) Application number: **15468005.2**

(22) Date of filing: **01.06.2015**

(54) **PROCESS AND APPARATUS FOR HIGH PERFORMANCE FLUE GAS CLEANING**

VERFAHREN UND VORRICHTUNG FÜR HOCHLEISTUNGS-RAUCHGASREINIGUNG

PROCÉDÉ ET APPAREIL DE NETTOYAGE DE GAZ DE CARNEAU À HAUTE PERFORMANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(43) Date of publication of application:
**07.12.2016 Bulletin 2016/49**

(73) Proprietor: **RUDIS poslovno zdruzenje za
inzeniring
in izgradnjo objekov d.o.o.
1420 Trbovlje (SI)**

(72) Inventors:
• **Loos, Dieter**
  **31832 Springe (DE)**
• **Bas, Dejan**
  **1410 Zagorje ob Savi (SI)**

(74) Representative: **Macek, Gregor**
  **ITEM d.o.o.
  Resljeva 16
  1000 Ljubljana (SI)**

(56) References cited:
EP-B1- 1 629 880    CN-U- 203 816 496
JP-A- S5 592 125    US-A1- 2015 023 855
US-B1- 6 235 256

**Description**

This invention relates to a process and an apparatus for high performance flue gas cleaning. More particularly it relates to improvements of a wet flue gas desulfurization process in which the flue gases containing sulphur oxides (SOx) and other environmental pollutants are treated in a single-loop, counter-current spray tower scrubber by atomized into droplets scrubbing liquid containing calcium- or sodium-based neutralizing alkaline reagent e.g. limestone ($CaCO_3$) or slaked lime ($Ca(OH)_2$). The invention relates, moreover, to improvements of a single-loop, counter-current spray tower scrubber to provide an optimal gas distribution over the scrubber spray zone and to enhance the SOx removal in an economically efficient manner.

TECHNICAL FIELD

Continuously tightening-up of the emission limit values by the new environmental regulations around the world leads in many cases to extremely high requirements for $SO_2$ removal from flue gases of combustion plants. Thus many new build power plant projects (coal and lignite fired power plants) in the Europe are being confronted with mandatory $SO_2$ emission limits corresponding to a $SO_2$ removal efficiency of higher than 99 %. An application of CCS (Carbon Capture and Storage) technologies makes similar high demands on $SO_2$ removal.

A most widely used and economically efficient method of flue gas desulfurization (FGD) is the wet lime- or limestone-based flue gas desulphurization. For decades single-loop spray tower systems were often preferred for this process because of simplicity of construction, higher reliability (low tendency to scaling or plugging), and moderate invest costs, lower operation and maintenance costs. Unfortunately performance guarantees of suppliers of conventional single-loop spray tower systems operating with limestone as reagent are mostly below value of 98 % for $SO_2$ removal.

A view, that high requirements to $SO_2$ removal cannot be covered safely by installation of conventional single-loop spray tower scrubbers using limestone as reagent, leads unavoidably to consideration of alternative concepts as double-loop scrubber, tray scrubber, jet bubble reactor or an application of reagents with higher alkalinity (e.g. slaked lime, sodium hydroxide, sodium bicarbonate) and/or process additives (e.g. organic acids). However, all these alternatives possess essential disadvantages in the investment, operation and maintenance.

Recent developments of Computational Fluid Dynamics (CFD) as well as of the modelling of multiphase chemical equilibria, applied to flue gas desulphurization process, show that the technological potential of single-loop spray tower scrubbers is not yet fully exploited. It is desirable to improve single-loop spray tower scrubbing using limestone for treating of the flue gas, to achieve high percentage of SOx removal maintaining simplicity of construction and higher reliability at lower invest, operation and maintenance costs.

The potential for improving of the process performance of single-loop spray tower scrubbers is primarily in enhancement of the overall mass transfer between the gas and liquid phase influenced by gas velocity distribution, retention time of gas phase inside the spray zone of the spray tower, spray patterns and manner of reagent suspension distribution.

BACKGROUND ART

The design, operation and maintenance issues of modern single-loop spray tower systems applicable to wet lime- or limestone-based flue gas desulphurization processes were summarized more recently in VGB-Standard for Type, Operation and Maintenance of Flue Gas Desulfurization Plants (VGB-Standard-S-015-2011-EN). An overview of flue gas desulphurization processes is given also by Electric Utility Engineer's FGD Manual, Radian International LLC., Pittsburgh Energy Technology Center. 1996.

In the related process, the hot flue gas is forwarded into a spray scrubber, where the flue gas is quenched and sulphur oxides ($SO_2$, $SO_3$) and other environmental pollutants (HCl, HF, $NO_2$, particulate matter) are removed from the gas phase to the recycle scrubbing slurry. The oxygen of the flue gas is also partially absorbed and participates in the chemical reactions running in the liquid phase of the scrubbing slurry. The scrubbing slurry contains about 10-15 wt. % of solids, which including mostly gypsum (product of the overall reaction of SOx, limestone and oxygen), 2-3 wt. % of limestone (reagent) and low percentage of inert solids, mainly silica, iron and aluminium oxides. The content of limestone in solids of scrubbing slurry is defined as limestone excess ratio and serves as a process criterion for absorption of SOx. The limestone excess ratio is controlled by addition of the fresh reagent (limestone) slurry proportionally to the SOx mass flow and in relation to pH value of the scrubbing slurry. In the wet lime- or limestone-based flue desulfurization process with forced oxidation, the oxidation air flow is drawn and dispersed into the scrubbing slurry for oxidation of sulphite to sulphate to enable formation of gypsum. The content of solids in the scrubbing slurry is maintained on the constant operational level by the bleed of a part of the scrubbing slurry and it subsequent dewatering up to designed level with producing of concentrated gypsum slurry or gypsum as a flue gas desulphurisation product. The systems for dewatering of gypsum bleed consist primarily of gypsum bleed pumps, hydro-cyclones or thickeners followed by vacuum filters or centrifuges. The liquid separated from the gypsum bleed (reclaim water) is typically returned to the scrubber, used for preparation of the reagent slurry or removed as waste water (blow down) to maintain the balance of chlorides and/or fine inert particulates in the scrubbing slurry. Through an addition of the make-up water the water losses through evaporation, FGD product (gypsum or gypsum slurry) removal and waste water purge are compensated. The make-up water may be added into the reaction tank or/and reclaim water tank. Moreover, the make-up water may be used for mist eliminator washing or for preparation of the reagent slurry.

A single-loop counter-current spray tower scrubber for wet lime- or limestone-based flue gas desulphurization consists of an empty cylindrical chamber in which the flue gas flows upwards through successive banks of spray nozzles that atomize the scrubbing slurry into droplets providing contact with the gas phase. Falling downwards (counter-current to the gas flow) droplets are collected in the reaction tank (scrubber sump) in the base of the scrubber, which serves as a feed tank for recirculation pumps and, in case of the process with forced oxidation, as an zone for injection of oxidation air. The scrubbing slurry is pumped by recirculation pumps continuously from the reaction tank to one or more dedicated spray headers that penetrate the scrubber walls and distribute the slurry over the spray nozzles. In the modern large FGD scrubbers each recirculation pump is usually dedicated to one spray header. In the upper part of the scrubber the flue gases are directed through a mist eliminator in order to minimize an entrainment of droplets in the clean flue gas.

In the prior art of the related conventional FGD scrubber the fresh reagent slurry is typically added directly into the reaction tank in the area sufficiently away from the suction of gypsum bleed pumps to prevent an immediate discharge of the reagent via the gypsum dewatering system.

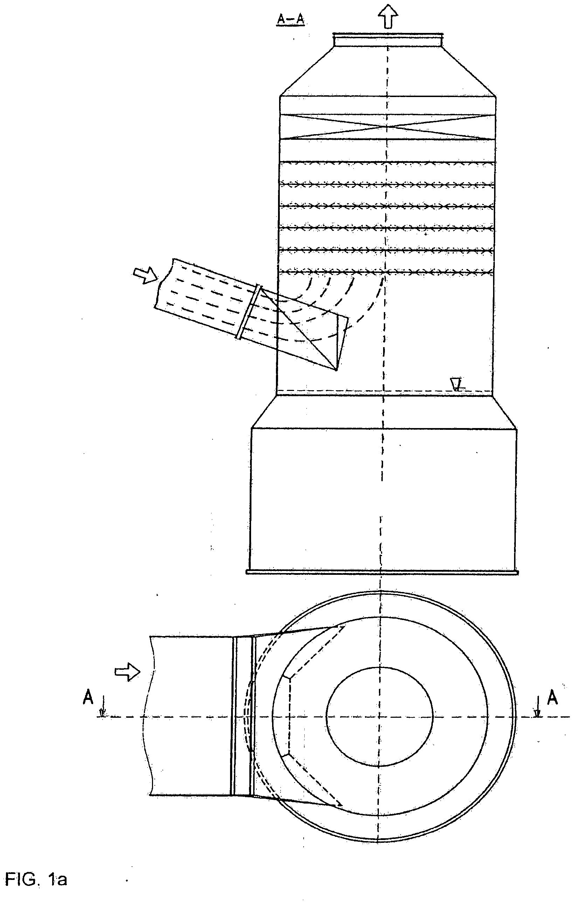

In the prior art of the related conventional FGD scrubber the flue gas is introduced into the spray zone via an inclined rectangular inlet duct that is laterally arranged with the bottom edge some meters above the normal operational level of the reaction tank and with the top some meters below the plane of the first spray bank (see Figure 1a). Because of curvature the inlet duct adjacent with the cylindrical chamber (spray zone) of the spray tower, flue gas regions in the middle of the inlet duct tend to flow directly upwards after the entrance into the spray zone, although flue gas regions at the side walls of the inlet duct penetrate deep into the middle of the scrubber. The result of such flue gas flow behaviour is reduced retention time of the gas phase inside the scrubber for spray zone regions near to the middle of the inlet duct and, respectively, inhomogeneous and deficient $SO_2$ removal. Therefore in EP 1629880 B1 already been proposed to direct the flue gas into the scrubber via two specially arranged inlet ducts, to provide a deeper penetration of the flue gas in the middle of the scrubber. However, this method is typically difficult to apply in FGD retrofit projects, where the ducting is fixed, as well as in the new build projects with tight plant layouts.

Because of missing of reliable process modelling tools the spray banks of FGD scrubbers till the year 2000 are equipped by nozzles of the equal type, flow rate, spray angle and frequently of the equal spray direction. More proper design of the prior art of the related conventional FGD scrubber of these years assumes installation of hollow cone nozzles of the same flow rate, 90° or 120° spray angle and spray direction of 50% upwards / 50 % downwards for all spray banks excepting the upper spray bank, that sprays downwards to prevent plugging of the mist eliminator. Such spray nozzle arrangements characterised by increased wall effect (flue gas sneakage) induced by deposition of the majority of droplets at the scrubber walls and reduced local pressure losses at the scrubber walls. Earlier optimisations of spray tower scrubbers of background art till the year 2000 are predominantly focussing on the geometrical coverage of the scrubber cross-section by nozzles without consideration of specifics of spray patterns as well as interactions of spray and flue gas. EP 0899001 A1 provides in this matter at least a general approach for selection of variations of nozzles and definition of spray nozzle arrangement in order to achieve a homogeneous flue gas distribution over spray banks. The influence of the wall effect (flue gas wall sneakage) on $SO_2$ removal was underestimated and usually not considered. However, the arrangement of spray nozzles in concentric circles (or other modifications of hexagonal structure), comprising of nozzles with the same spray characteristics (direction, angle, flow rate) and therefore same momentum of the droplets, results unavoidably in reduction of local pressure losses at the scrubber walls and development of the wall effect (flue gas sneakage). This reduction of local pressure losses is induced by deposition of the majority of droplets at the scrubber walls and leads consequently to the lower momentum transfer from the droplets at the scrubber walls in comparison with the scrubber middle. The flue gas sneakage means a locally lower retention time of the gas phase inside the scrubber spray zone. In combination with the lower spray density at the scrubber walls it results in formation of $SO_2$ streaks and finally in lower $SO_2$ removal because of poor overall mass transfer of $SO_2$ from the gas phase into the liquid phase of scrubbing slurry.

In US 2015/023855 a wet scrubber (10) useful for cleaning a process gas (F) comprising at least a first spray level system (40) and a second spray level system (48) arranged compactly vertically above the first spray level system (40) in a wet scrubber tower (14) is disclosed. Each spray level system (40, 48) is equipped with a plurality of atomizing flattened relatively wide spray angle nozzles (56) for atomizing an absorption liquid (AL) supplied thereto for contact and intermixing with the process gas (F) for removal of environmental pollutants therefrom. In said application the fresh reagent is supplied to absorption liquid tank (26) through a supply pipe (34). No specific duct flow arrangement with flat rotating vanes and a spray zone chamber with spray levels with specific spray nozzles assembly is disclosed.

DISCLOSURE OF THE INVENTION

The invention is defined by the appended independent claims. Any information falling outside the scope of the claims is for explanation only.

The invention provides improvements of flue gas cleaning process and apparatus that allow achieving lower emissions of environmental pollutants and higher air quality by enabling of higher removal of sulphur oxides and other accompanying pollutants from the flue gases.

In summary the process may comprise (a) forwarding of the flue gas containing environmental pollutants including sulphur oxides through an inlet duct of improved construction into the spray tower scrubber, providing an optimal distribution of the flue gas over the scrubber cross-section; (b) directing of the raw flue gas through a spray zone of said scrubber at average cross-sectional velocities of maximally 6 m/s; (c) introducing into the spray zone of the scrubbing slurry containing reagent and atomized into droplets by improved arrangement of spray nozzles reducing, providing contact of scrubbing slurry with the gas phase without flue gas wall sneakage; (d) collecting of the scrubbing slurry after the contact with the gas phase and absorption of pollutants in a reaction tank (scrubber sump) of volume enabling a residential time of scrubbing slurry of 3-5 minutes in relation to the total scrubber recirculation rate; (e) a partial bleeding of scrubbing slurry after from the reaction tank to the by-product dewatering system to maintain a solids content in the scrubbing suspension of 8-20 wt. %; (f) dewatering of by-product in a dewatering system comprising at least one hydrocyclone, providing a stream of reclaim water, composed mainly of hydrocyclone overflow suspension with solid fraction containing fine reagent particles; (g) directing of the hydrocyclone underflow to the further treatment or handling; (h) returning of the stream of reclaim water to reaction tank; (i) dosing of reagent proportionally to the mass flow of total or absorbed SOx and in relation to pH value; (j) mixing of reagent, more particularly in form of powder, with partial or total flow of the reclaim water for preparation of the reagent slurry and directing of this slurry to the scrubber; (k) injection of the reagent slurry on demand of higher $SO_2$ removal into the suction pipe of the recirculation pump supplying the upper spray bank of a single-loop counter-current spray tower scrubber or, in case of lower $SO_2$ removal requirements, directly into the reaction tank.

The single aspects of the invention may be verified by means of Computational Fluid Dynamics (CFD) analysis with modelling of multiphase physical and chemical absorption processes. The overall effect of implementation of claimed improvement measures was confirmed by emission measurements in a reference flue gas desulphurisation plant. For CFD simulations was applied the ANSYS Workbench 12.1 software package including ANSYS FLUENT module for numerical multiphysics flow simulation (solver and post-processing analysis). The numerical solution is based on the principle of Finite Element Method (FEM), where the whole scrubber is represented through a mesh-grid model consists of plurality of volume cells, in that physical and chemical processes are modelled and balanced considering mass-, momentum-, and energy-transfer over boundaries of adjacent cells.

According to two-film mass transfer theory, that is used for modelling of the multiphase gas-liquid system by Finite Element Method, the term S [kg·s$^{-1}$·m$^{-3}$] of mass absorption of $SO_2$ from the gas phase into droplets can be expressed as

$$S = M \cdot A \cdot ((1/k_g) + (H/(k_l \cdot E)))^{-1} \cdot (C_g - H \cdot C_l) \qquad (1)$$

where: M - molar weight of $SO_2$, [kg/mol]; A - interface area between gas and suspension droplets per unit volume, [m$^{-1}$]; H - Henry's law constant for $SO_2$; $C_g$ and $C_l$ - molar concentration of $SO_2$ in the gas and liquid phase respectively, [mol·m$^{-3}$]; $k_g$ and $k_l$ - mass transfer coefficient in the gas and liquid phase respectively [m·s$^{-1}$]; E - enhancement factor due to chemical reaction.

The enhancement factor, E, in the equation (1) describes the influence of a reaction of $SO_2$ with alkali species of scrubbing slurry on the mass transfer rate. In general, the enhancement factor is defined as the ratio of the rate of absorption of a gas in a reactive liquid to the rate of the physical process at identical concentration differences of the absorbing gas. For purpose of modelling of flue gas desulphurization processes the enhancement can be calculated as an empirical factor (Gao, X., Huo, W., Luo Z., Cen, K., CFD Simulation with enhancement factors of sulphur dioxide absorption in the spray scrubber., Journal of Zhejiang University, SCIENCE A, 9(11), 2008)

$$E = 0.0269 \cdot (100 \cdot m)^{0.122} \cdot pH^{2.4} \cdot (G/L) \qquad (2)$$

where: m - concentration of limestone ($CaCO_3$) in the scrubbing suspension, [mol/kg]; pH - actual pH value of liquid phase, the function of concentration of soluble ion species; G - volume of gas phase in the calculation cell (cell volume minus cumulative volume of droplets in the cell), [m$^3$]; L - volume of liquid phase in the calculation cell (cumulative volume of droplets in the cell), $[m^3]$.

The concentration of $SO_2$ in the gas phase ($C_g$) reduces through gas-liquid absorption from the bottom to the top of the scrubber spray zone, thereby the mass transfer driving force (related among others to reduction of ($C_g$-H·$C_l$) term) and overall mass absorption term is reduces simultaneously. The concentration of soluble alkali species (related to pH-value) and concentration of solid reagent in falling droplets of scrubbing suspension reduces in contrary direction from the top of the scrubber spray zone to the bottom, thereby the impact of chemical absorption on the overall mass absorption term is reduces respectively. Such trends of process characteristics are typical for counter-current spray towers. For conventional flue gas desulphurisation scrubbers is valid, that the scrubbing slurry directed to the individual spray banks, possesses the same pH value (same concentration of soluble alkali species) and same content of solid reagent and, thereby possesses similar characteristics of chemical process enhancement for all spray banks (at lower and higher $SO_2$ concentrations in the gas phase) and the same mass transfer driving force in the liquid phase related to H/($k_l$·E) term.

For a cost effective and higher $SO_2$ removal it is necessary to increase the potential of chemical process enhancement (expressed by enhancement factor) especially in the upper part of the spray zone to compensate the reduction of mass transfer driving force through reduction of $SO_2$ concentration. It is preferred to increase the concentration of reagent in the solid phase of the scrubbing slurry and related concentration of alkali species (products of reagent dissolution) in the solid phase of the scrubbing slurry for the upper spray banks.

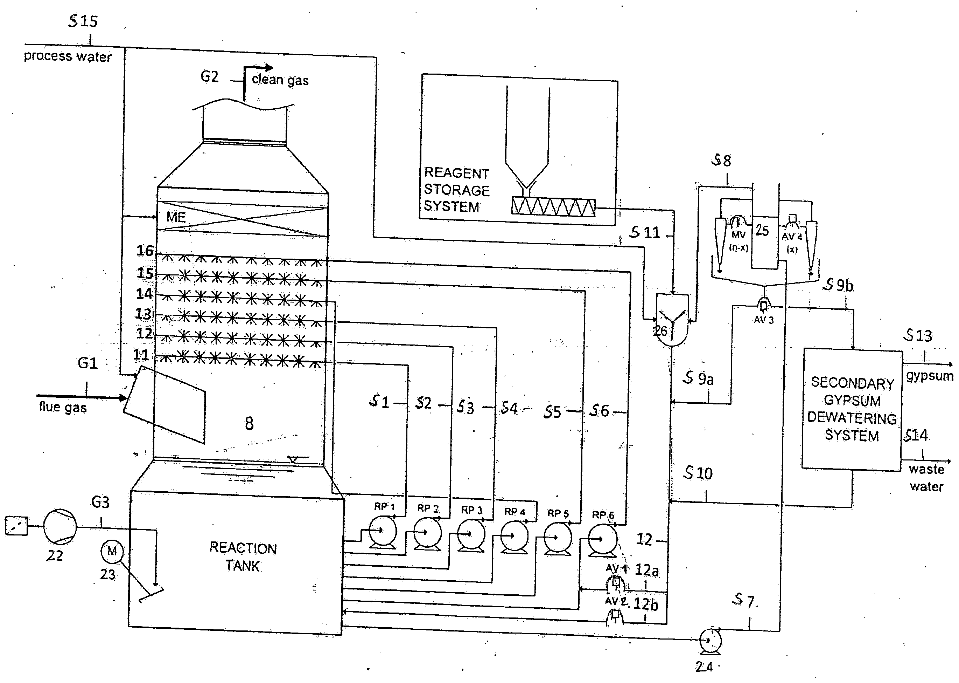

Preferably this task is solved through process improvements wherein the fresh reagent slurry is directed to the suction pipe of the recirculation pump supplying the upper spray bank increasing the concentration of reagent in the scrubbing suspension in the upper part of the spray zone locally, thereby the reagent utilization and limestone excess ratio in the scrubbing slurry of the reaction tank are not changed (see Figure 5).

In the more preferred embodiments, the reagent is mixed prior directing to the suction pipe of recirculation pipe with the total flow of reclaim water, in particular with hydrocyclone overflow, that solid fraction contains high percentage of fine reagent particles supporting the $SO_2$ removal additionally.

It is also preferred for this improved process to maintain a possibility of alternative dosing of reagent slurry into the reaction tank in a conventional manner to provide enough process reliability in case of recirculation pump malfunction or stoppage for maintenance purposes.

It is preferred, that the spray tower provides an optimal flue gas and scrubbing slurry distribution, preventing wall effect (flue gas sneakage at the scrubber walls) and maintaining a similar retention time for all regions of the gas flow inside the spray zone.

In one aspect, a potential for an improvement of gas phase distribution for the spray zone is providing of homogeneous gas velocity profile upstream of the first (lowest) spray bank of the spray zone.

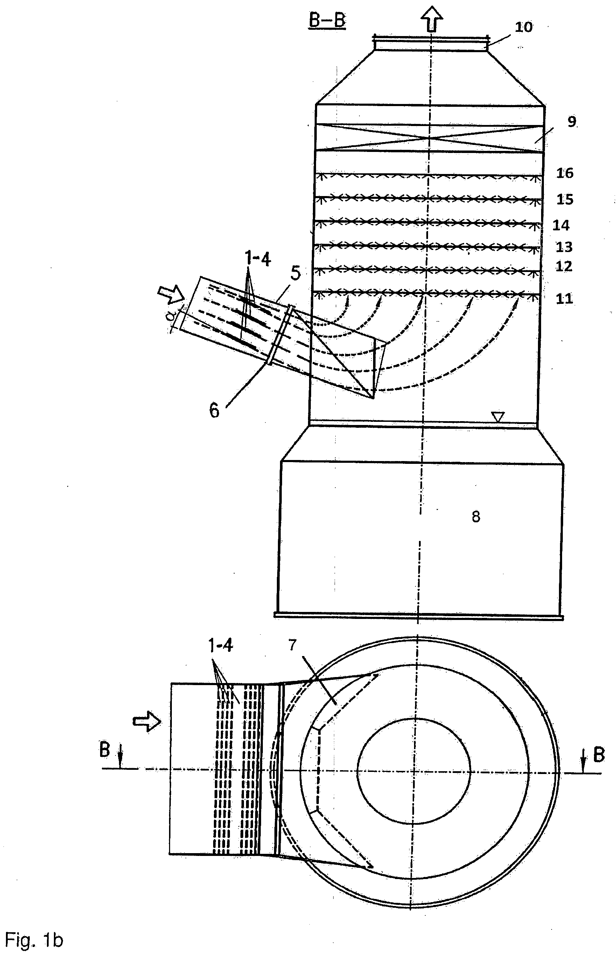

In this aspect the invention provides a solution for an improvement of the flue gas velocity distribution at the scrubber inlet upstream of the lowest spray bank. The problem of the prior art (background art) described in the previous section, (see also Figure 1a) is solved through an improvement of scrubbing apparatus in that the duct for inflow of the flue gases into the spray tower is equipped by a row of at least two flat turning vanes rotated on a specific angle relative to the duct guidance (see Figure 1b). This improvement of the scrubbing apparatus or arrangement of turning vanes at the scrubber inlet duct provides a specific wedge shape gas velocity profile that characterizes by higher gas velocities at the bottom of the scrubber inlet duct and lower gas velocities at the top of the scrubber inlet duct. Getting higher velocities and therefore higher impulse gas portions will be forwarded near to reaction tank surface deeper into the scrubber spray zone. Getting lower velocities gas phase will be forwarded upwards to the lower spray bank.

The advantage of such arrangement of the scrubber inlet duct in comparison to the conventional one is that a more homogeneous gas distribution upstream the lowest spray bank will be achieved, providing a respective increase of the overall retention time of the gas phase inside the scrubber spray zone.

It is preferred, that the rotation angle of the turning vanes installed in the inlet duct in relation to the duct guidance is specific and varies in the range between 1° and 10°, thereby the upper limit of rotation angle is limited by the aerodynamic stall.

In another aspect, a potential for an improvement of gas phase distribution for the spray zone is a suppression of the wall effect (flue gas sneakage at the scrubber walls).

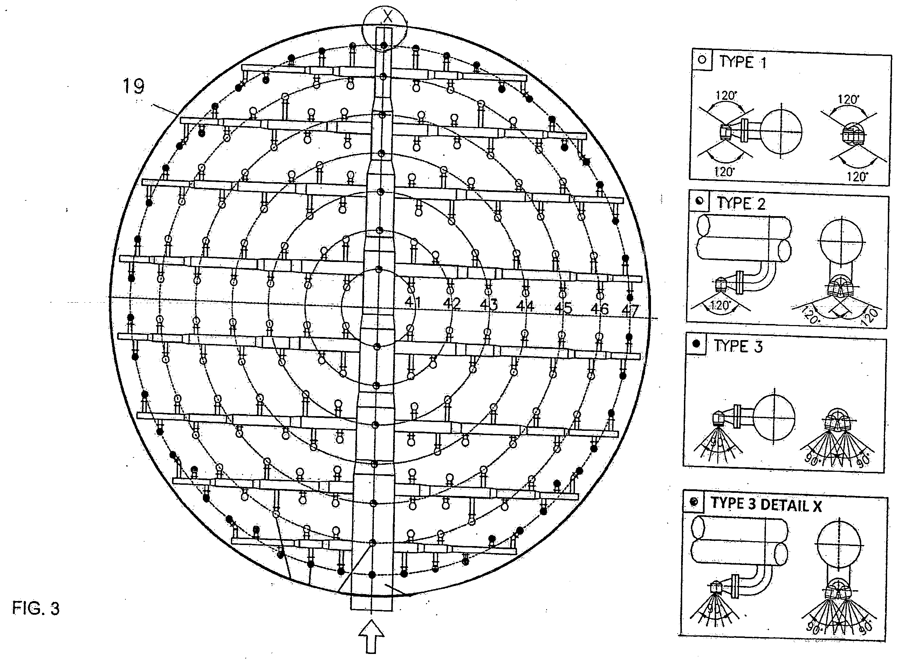

In this aspect the invention provides a solution to increase the overall retention time of the gas phase inside the scrubber spray zone and to guide the gas phase in the areas of the spray zone with higher spray densities. The problem is solved through improvements of scrubbing apparatus by installation for all spray banks at scrubber walls, excepting the upper spray bank, nozzles spraying downwards and nozzles in the middle of the spray bank spraying as well upwards as downwards. For upper spray bank nozzles spraying downwards are applied (see Figure 3).

The advantage of such arrangement of the scrubber inlet duct in comparison to the conventional one is that increase of the local pressure losses at the scrubber walls by controlled momentum transfer from spray droplets to the gas phase that is realized a directional spraying against the flow of the flue gas and by adjustment of the flow rate of nozzles. An application of full cone nozzles at the scrubber walls is preferred, because of lower tendency to deposition of droplets on scrubber walls in comparison with hollow cone nozzles and generation of homogeneous pressure area below the nozzles. An additional advantage of application of full cone nozzles in comparison with hollow cone nozzles is a lower abrasion of scrubber wall lining (lower cumulative kinetic energy of droplets spraying scrubber walls).

In another more specific aspect the invention provides an approach for optimisation of arrangement of nozzles in concentric circles by adjustment of radial distance between concentric groups of spray nozzles providing controlled momentum transfer from spray droplets to the gas phase.

The advantage of such approach is an improvement of gas phase distribution without distortion of the geometrical order of nozzles (modified hexagonal order) maintaining an optimal coverage of all spray bank areas.

BRIEF DESCRIPTION OF DRAWINGS

Figure 1a presents a schematic top view and longitudinal cross-section view of a typical arrangement of the scrubber inlet duct of the prior art, showing a lower penetration of the flue gas in the middle of the scrubber.

Figure 1b presents a schematic top view and longitudinal cross-section view of the preferred embodiment of the invention employing an inlet duct with turning vanes for a single-loop, counter-current spray tower scrubber. A specific angle of rotation of turning vanes relative to the duct guidance is designated as alpha. Arrows in the Figure 1b show schematically streamlines of the flue gas flow entering the scrubber spray zone. It is shown that the flue gas is guided by turning vanes to the bottom of the inlet duct and to the spray zone providing homogeneous gas phase distribution upstream of the first spray bank, required for higher $SO_2$ removal.

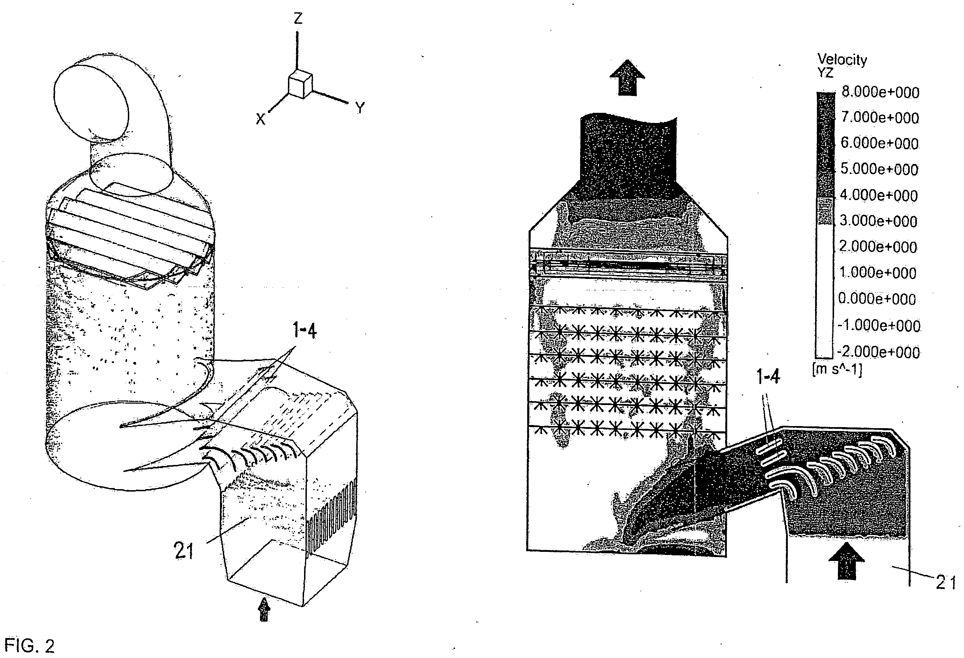

Figure 2 presents exemplarily a flow velocity profile of longitudinal cross-section of a spray tower scrubber in a plane passing through the middle of the scrubber inlet and outlet duct, with an inlet duct according to the invention. The flue gas enters the scrubber downstream of a rectangular fan silencer, an elbow and a row of turning vanes, forming a specific wedge shape gas velocity profile that characterizes by higher gas velocities at the bottom of the scrubber inlet duct and lower gas velocities at the top of the scrubber inlet duct. The grey colour palette of the flow velocity profile corresponds to the scale in the right side of the image.

Figure 3 presents exemplarily a schematic view of a preferred embodiment of the invention for a spray nozzle arrangement in concentric circles applicable for a single-loop, counter-current spray tower scrubber. The spray bank of seven concentric circles of nozzles is characterised by an arrangement of full cone nozzles spraying 100 % downwards (double full cone preferable) for the last circle near to the scrubber wall as well as arrangement of hollow cone nozzles (spraying 50% upwards, 50% downwards) in the middle of the spray bank. The spray nozzle arrangement is characterised also by a reduced distance between the nozzle circle No. 47 and the nozzle circle No. 46 showing additional possibilities of control of gas velocity distribution and $SO_2$ removal.

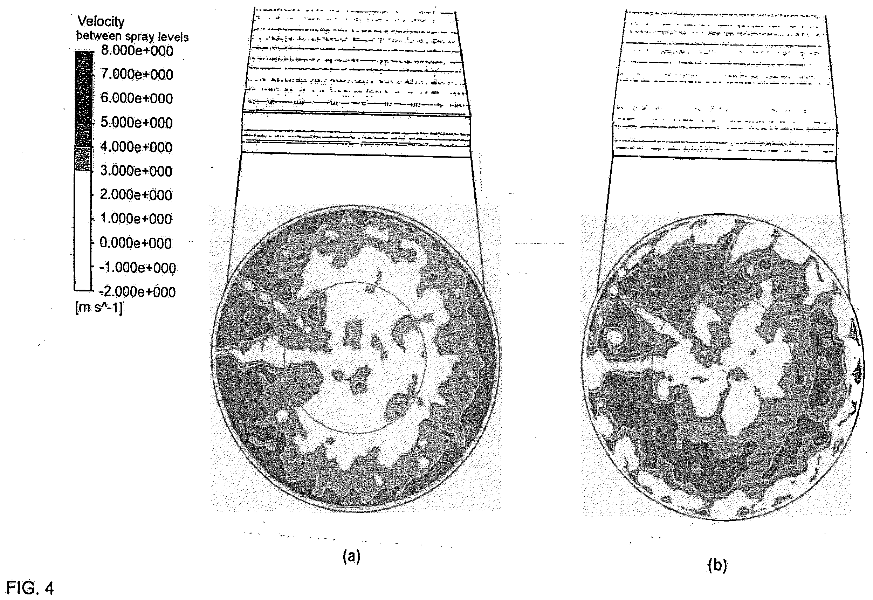

Figure 4 presents exemplarily a comparison of cross-section views of flow velocity profiles of a spray tower scrubber in a plane passing between planes of spray banks in the middle of the spray zone and employing: (a) a spray bank of the prior art, equipped only with hollow cone nozzles of equal type and spray direction of 50% upwards / 50 % downwards; (b) an improved spray nozzle arrangement as per Figure 3. The dark areas represent higher velocity regions according to the grey colour palette for velocity ranges. It is shown that an unimproved spray bank arrangement provides a strong wall effect (flue gas sneakage at the scrubber walls). An improved spray nozzle arrangement as per Figure 3 provides, in contrary, lower flue gas velocities at scrubber walls deflecting the flue gas in the middle of the scrubber preventing the wall effect.

Figure 5 presents a process flow diagram of a preferred embodiment of the invention employing a reagent dosing wherein the fresh reagent is injected on demand (stream S12a) in the suction pipe of the recirculation pump supplying the upper spray bank of a single-loop, counter-current spray tower scrubber or, alternatively, (stream S12b), in the reaction tank of the scrubber. It is shown that the fresh reagent (stream S11) is injected with a flow of reclaim water comprising primarily hydrocyclone overflow (stream S8), thereby the reagent is dosed directly from a reagent silo via a screw conveyor into a mixing vessel.

DESCRIPTION OF PREFERRED EMBODIMENTS

The invention has preferred application to flue gas desulphurisation plants for utility and industrial steam generators where a high $SO_2$ removal from the flue gases is required. This preferred embodiment is described below to show the actual best mode for carrying out the invention and to exemplify advantages of the invention. The invention is not limited to this embodiment thereby improvements of flue gas desulphurization process and apparatus are applicable to the flue gases of other sources, containing different pollutant gases and designed for lower pollutant removal requirements.

In aspects of an apparatus for flue gas desulphurization the invention provides an approach for improvements of gas and liquid phase distribution inside the counter-current spray tower scrubbers. Specific characteristics of apparatus shall be defined taking into account the process design requirements as well as constructional limitations. Therefore, an application procedure of the invention shall include as a first step preferably a numerical or physical system modelling. A CFD modelling of the system provides actually the best possibility to identify and to verify specific characteristics of apparatus based on approaches of the present invention.

Figure 1b illustrates a preferred embodiment of the invention for a single-loop, counter-current spray tower scrubber equipped with six spray banks (11-16), with a mist eliminator (9), with a reaction tank (8), with an outlet opening (10) and an inlet duct (5) improved by installation of four turning vanes (1-4). The angle alpha is specific for each application case, depends on flow profile upstream turning vanes and duct guidance, and, therefore should be preferably verified by CFD modelling. The upper limit of rotation angle is limited by the aerodynamic stall, which corresponds usually to alpha 7°- 10° (degree), and accompanying by formation of flow vortexes and an increasing of pressure losses. A formation and development of flow vortexes at the scrubber inlet duct (5) is disadvantageous, because of possible gas backflow with an entrainment and a deposition of scrubbing slurry droplets on surfaces of the inlet duct and turning vanes. Such deposition of scrubbing slurry droplets can be a cause of corrosion of materials of duct, turning vanes and upstream equipment, especially in case of an absence of proper surface protection or an application of low-grade steel as a constructional material.

Figure 2 illustrates exemplarily a development of a flow velocity profile in a single-loop, counter-current spray tower scrubber (general view in the left side of the Figure 2) employing an inlet duct according to the present invention. The inlet duct arrangement shown by Figure 2 is typical for a flue gas desulphurization plant, where an induced draught fan, equipped by splitter silencer(s) (21), is installed closed to and upstream of the FGD scrubber. In case of transition from a vertical flow duct to an inclined scrubber inlet duct arises a situation where a combination of >90° turning vanes and rotated relative to the duct guidance flat vanes (1-4) is advantageous to form a required wedge-type flow velocity profile.

Figure 3 illustrates exemplarily a preferred embodiment of the invention for a spray nozzle arrangement in concentric circles (41-47). An application of double full cone nozzles (Type 3) at the scrubber wall (19) is advantageous because of finer droplet size distribution generated by collisions of coarse droplets from individual spray nozzles. A deflection of gas flow provided by full cone nozzles (Type 3) arranged at the scrubber wall may be controlled by variations of the individual flow rate per nozzle, number of full cone nozzles and spray angle, although a spray angle of 90° is considered as preferable. A reduced distance between the full cone nozzle circle at the scrubber wall (circle No. 47 in the Figure 3) and previous nozzle circle (hollow cone nozzles of TYPE 1 and 2, circle No. 46 in the Figure 3) is intended to provide an additional spray density in areas of higher gas velocity (transition zone of flue gas deflected from the scrubber wall by downwards spraying). The evidence of such high velocity areas in case of improvement of spray banks according to the preferred embodiment of the invention is shown by the Figure 4b.

A Figure 5 illustrates exemplarily a process flow diagram of a preferred embodiment of the invention employing a scrubber system with oxidation air injection (blower 22, stream G3) into the reaction tank in front of agitators (23), a gypsum dewatering system, a reagent storage and dosing system, wherein the fresh reagent is injected on demand via powered automatic valve (AV1) in the suction pipe of the recirculation pump (RP 6) supplying the upper spray bank (16) of a single-loop, counter-current spray tower scrubber or, alternatively, in the reaction tank (8) of the scrubber. Note that in this preferred embodiment the powdered reagent is dosed directly from the reagent storage or reagent daily silo by means of weighting screw conveyors into the mixing vessel (26). The throughput of screw conveyors (stream S11) is rpm controlled proportionally to the mass flow of total or absorbed SOx and in relation to pH value of slurry in the reaction tank (8). The mixing vessel (26) possesses preferably a tangential inlet for hydrocyclone overflow (stream S8) that is directed gravimetrically from the hydrocyclone overflow vessel on the top of hydrocyclone group (25) to the mixing vessel inlet. A tangential inflow provides a vortex inside the mixing vessel (26) to homogenize the reagent slurry. A gravimetrical flow of mixed reagent slurry downstream of the mixing vessel (stream S12) provides an underpressure which can be equalized by a vent in the casing of the screw conveyor. This vent prevents infiltration of sticky vapours into the screw conveyor casing and maintains the reagent dry up to the moment of contact with the hydrocyclone overflow. For the process it is preferred to apply rpm controlled gypsum product bleed pumps (24) in order to adjust the hydrocyclone overflow quantity (stream S8) to the process requirements. An application of rpm controlled gypsum bleed pumps (24) make necessary to reduce the number of individual hydrocyclones in operation to maintain required operational pressure in the hydrocyclone group manifold. Therefore a required number of hydrocyclones shall be equipped additionally to manual valves (MV, n-x pieces, where n is the total number of single hydrocyclones) by automatic shutoff valves (AV4, x pieces), which are close or open to maintain required operational pressure in the hydrocyclone group (25) manifold.

Such kind of dosing of reagent and preparation of reagent slurry means a continuous operation of gypsum bleed pumps (24) also in the case a gypsum bleed (utilization of hydrocyclone underflow suspension, stream S9b) is not required. For this case a three-way-valve (AV3) directing the hydrocyclone underflow (stream S9a) to the common reclaim water (reagent slurry flush, stream S12) pipe or, alternatively, to the secondary gypsum dewatering (e.g. vacuum belts or centrifuges) is foreseen.

The preferred embodiment of the invention or process improvement illustrated by the Figure 5 is especially advantageous flue gas desulphurisation plants downstream of utility steam generators fired by fuels with higher sulphur content (e.g. lignite, high-sulphur coal, heavy fuel oil, petroleum coke, orimulsion). Moreover the application is especially advantageous for a single-loop, counter-currect tower scrubbers with a big number of recirculation pumps dedicated to individual spray levels. This advantageous application may be explained by a comparison of mass balances, because for high $SO_2$ freights the fresh reagent throughput (consumption) is higher, therefore the reagent excess in the scrubbing slurry of the upper spray bank can be raised essentially. Also in case of application of big number of recirculation pumps, the fraction of fresh reagent added in scrubbing slurry forwarded to the upper spray bank is higher, so the local limestone excess in the scrubbing slurry of the upper spray bank is higher.

## Claims

1. A spray tower apparatus for high-performance removal of sulphur oxides and other accompanying environmental pollutants from the flue gases by gas-liquid absorption with chemical reaction comprising:

    a reaction tank (8) for collection of the falling down spray droplets, for feeding of spray tower recirculation pumps, for dissolution of the reagent and for formation of the flue gas desulphurization product;
    an inlet duct (5) for inflow of the flue gases into the spray tower;
    a an outlet duct (10) for outflow of the flue gases on the top of the spray tower;
    a spray zone chamber situated between the inlet (5) and outlet (10) duct, comprising at least two spray banks (11-16) with spray nozzles assembly, **characterized in that**,

    the inlet duct (5) for inflow of the flue gases into the spray tower is equipped by a row of at least two flat turning vanes (1- 4) which are installed with a specific rotation angle ($\alpha$) relative to the inlet duct (5) guidance, wherein the rotation angle ($\alpha$) varies in the range between 1° and 10° thus providing an inflow velocity profile of a wedge shape with higher flue gas velocities at the bottom of the scrubber inlet duct (5) and lower flue gas velocities at the top of the scrubber inlet duct (5) and
    wherein for the plurality of spray banks (11- 15), excepting the upper spray bank (16), the nozzles at the scrubber walls (19) spraying downwards and other nozzles in the middle of the spray banks (11- 15) spraying as well upwards as downwards;
    for upper spray bank (16) nozzles spraying downwards only.

2. A spray tower apparatus according to claim 1, **characterised in that** the spray nozzles at the scrubber wall (19) are of a full cone type (Type 3) and the nozzles in the middle of the spray banks (11-16) are of a hollow cone type (Type 1 and Type 2).

3. A spray tower apparatus according to claim 1, **characterised in that**, for a spray nozzle arrangement in concentric circles, a deflection of gas flow of full cone type (Type 3) spray nozzles at the scrubber wall (19) is controlled by variations of the individual flow rate per full cone type nozzle, number of full cone type nozzles and spray angle and may be different from the flow rate of spray nozzles in the middle of the spray bank (11 - 16).

4. A spray tower apparatus according to claim 3, **characterised in that** a spray angle of spray nozzles of full cone type (Type 3) at the scrubber wall (19) is preferably of 90° and may be different from the spray angle of nozzles in the middle of the spray bank (11-16).

5. A spray tower apparatus according to claim 1, **characterised in that** the spray nozzles of individual spray bank (11-16) are arranged in concentric circles (41 - 47) with variable distance between adjacent concentric circles (41 - 47).

6. A flue gas cleaning process for removal of sulphur oxides and other accompanying environmental pollutants wherein the flue gas (G1) flows upwards through a single-loop counter-current spray tower scrubber with successive spray banks (11- 16) of spray nozzles distributing aqueous reagent slurry pumped from the reaction tank on the base of the scrubber, the scrubbing slurry is collected in the reaction tank and a portion of it is pumped for dewatering of the process by-product, and fresh reagent (S11) is injected on demand of higher pollutant gas removal in the suction pipe of the recirculation pump (RP6) supplying the upper spray bank (16) or in the reaction tank (8) of the scrubber, **characterised in that** the flue gas (G1) flows vertically upward through a spray zone consisting of a plurality of spray banks (11-16), wherein for the plurality of spray banks (11- 15), excepting the upper spray bank (16), the nozzles at the scrubber walls (19) spraying downwards and other nozzles in the middle of the spray banks (11- 15) spraying as well upwards as downwards and for upper spray bank (16) nozzles spraying downwards only, and wherein the flue gas (G1) is directed into the scrubber through an inlet duct (5) equipped by a row of at least two flat turning vanes (1 - 4) which are installed with a specific rotation angle ($\alpha$) relative to the inlet duct (5) guidance.

7. A process according to claim 6, **characterised in that** the rotation angle ($\alpha$) of flat turning vanes (1 - 4) varies in the range between 1° and 10° thus providing an inflow velocity profile of a wedge shape with higher flue gas velocities at the bottom of the scrubber inlet duct (5) and lower flue gas velocities at the top of the scrubber inlet duct (5).

8. A process according to claim 6 and 7, **characterised in that** the fresh reagent (stream S11) is injected with the flow of reclaim water (stream S12) from the by-product dewatering system, in particular with gravimetric return of gypsum hydrocyclone overflow suspension (stream S8).

**Patentansprüche**

1. Sprühturmvorrichtung zur Hochleistungsentfernung von Schwefeloxiden und anderen begleitenden Umweltschadstoffen aus den Rauchgasen durch Gas-Flüssigkeits-Absorption mit chemischer Reaktion, umfassend:

ein Reaktionsbehälter (8) zum Sammeln der herabfallenden Sprühtröpfchen, zur Einspeisung von Sprühturm-Rezirkulationspumpen, zur Auflösung des Reagenzmittels und zur Bildung des Rauchgasentschwefelungsprodukts;
ein Einlasskanal (5) zum Einströmen der Rauchgase in den Sprühturm;
ein Auslasskanal (10) zum Ausströmen der Rauchgase auf der Oberseite des Sprühturms;
eine, sich zwischen dem Einlass- (5) und dem Auslasskanal (10) befindende Sprühzonenkammer, die mindestens zwei Sprühbänke (11-16) mit Sprühdüsen aufweist, **dadurch gekennzeichnet, dass** der Einlasskanal (5) zum Einströmen der Rauchgase in den Sprühturm mit einer Reihe von mindestens zwei flachen Umlenkschaufeln (1-4), die mit einem bestimmten Drehwinkel (a) relativ zur Führung des Einlasskanals (5) angeordnet sind, ausgestattet ist, wobei der Drehwinkel (a) im Bereich zwischen 1° und 10° variiert und damit ein keilförmiges Einlaufgeschwindigkeitsprofil mit höheren Rauchgasgeschwindigkeiten am Boden des Wäschereinlasskanals (5) und niedrigere Rauchgasgeschwindigkeiten an der Oberseite des Wäschereinlasskanals (5) bereitstellt, und wobei für die Mehrzahl von Sprühbänken (11-15) mit Ausnahme der oberen Sprühbank (16) die Düsen an den Wäscherwänden (19) nach unten sprühen und andere Düsen in der Mitte der Sprühbänke (11-15) nach oben sowie nach unten sprühen;
wobei die Düsen der oberen Sprühbank (16) nur nach unten sprühen.

2. Sprühturmvorrichtung nach Anspruch 1, **dadurch gekennzeichnet, dass** die Sprühdüsen an der Wäscherwand (19) vom Vollkegel-Typ sind (Typ 3) und die Düsen in der Mitte der Sprühbänke (11-16) vom Hohlkegeltyp sind (Typ 1 und Typ 2).

3. Sprühturmvorrichtung nach Anspruch 1, **dadurch gekennzeichnet, dass** für eine Sprühdüsenanordnung in konzentrischen Kreisen, eine Umlenkung des Gasstroms aus den Sprühdüsen von Vollkegeltyp (Typ 3) an der Wäscherwand (19) durch Schwankungen der individuellen Durchflussmenge pro Vollkegeldüse, die Anzahl von Vollkegeldüsen und Sprühwinkel gesteuert wird und sich von der Strömungsgeschwindigkeit der Sprühdüsen in der Mitte der Sprühbank (11-16) unterscheiden kann.

4. Sprühturmvorrichtung nach Anspruch 3, **dadurch gekennzeichnet, dass** ein Sprühwinkel der Sprühdüsen vom Vollkegeltyp (Typ 3) an der Wäscherwand vorzugsweise 90° beträgt und sich von dem Sprühwinkel der Düsen in der Mitte der Sprühbank (11-16) unterscheidet.

5. Sprühturmvorrichtung nach Anspruch 1, **dadurch gekennzeichnet, dass** die Sprühdüsen der einzelnen Sprühbank (11-16) in konzentrischen Kreisen (41-47) mit variablem Abstand zwischen den benachbarten konzentrischen Kreisen (41-47) angeordnet sind.

6. Rauchgasreinigungsverfahren zur Entfernung von Schwefeloxiden und anderen begleitenden Umweltschadstoffen, bei dem das Rauchgas (G1) nach oben strömt, durch einen Einschleifen-Gegenstrom-Sprühturm-Wäscher mit aufeinander folgenden Sprühbänken (11-16) mit Sprühdüsen, die eine wässrige Reagenzmittelsuspension, die aus dem Reaktionstank auf den Boden des Wäschers gepumpt wird, verteilen, der Waschschlamm wird im Reaktionsbehälter gesammelt und ein Teil davon zur Entwässerung des Prozessnebenprodukts gepumpt, und frisches Reagenzmittel (S11) wird bei Bedarf von höherer Schadstoffgasentnahme ins Saugrohr der Umwälzpumpe (RP6), die die obere Sprühbank (16) versesorgt, oder in den Reaktionstank (8) des Wäschers eingespritzt, **dadurch gekennzeichnet, dass** das Rauchgas (G1) durch eine aus mehreren Sprühbänken (11-16) bestehende Sprühzone vertikal nach oben strömt, wobei bei der Mehrzahl von Sprühbänken (11-15), mit Ausnahme der oberen Sprühbank (16), die Düsen an den Wäscherwänden (19) nach unten sprühen und andere Düsen in der Mitte der Sprühbänke (11-15) sowohl nach oben, als auch nach unten sprühen, und wobei die Düsen der oberen Sprühbank (16) nur nach unten sprühen, und wobei das Rauchgas (G1) durch einen Einlasskanal (5) in den Wäscher geleitet wird, der mit einer Reihe von mindestens zwei flachen Umlenkschaufeln (1-4), die mit einem bestimmten Drehwinkel (a) relativ zur Führung des Einlasskanals (5) angeordnet sind, ausgestattet ist.

7. Verfahren nach Anspruch 6, **dadurch gekennzeichnet, dass** der Drehwinkel (a) der flachen Umlenkschaufeln (1-4) im Bereich zwischen 1° und 10° variiert und damit ein keilförmiges Einlaufgeschwindigkeitsprofil mit höheren Rauchgasgeschwindigkeiten am Boden des Wäschereinlasskanals (5) und niedrigere Rauchgasgeschwindigkeiten an der Oberseite des Wäschereinlasskanals (5) bereitstellt.

8. Verfahren nach Anspruch 6 und 7, **dadurch gekennzeichnet, dass** das frisches Reagenzmittel (S11) mit dem Rückflusswasserstrom (S12) aus dem Nebenprodukt Entwässerungssystem, insbesondere mit gravimetrischer Rückführung der Gips-Hydrozyklon-Überlaufsuspension, eingespritzt wird.

**Revendications**

1. Appareil à tour de pulvérisation pour l'élimination hautement efficace d'oxydes de soufre et d'autres polluants environnementaux associés à partir des gaz de combustion par absorption gaz-liquide avec réaction chimique, comprenant :

   une cuve à réaction (8) pour la collecte des gouttelettes de pulvérisation tombantes, pour l'alimentation des pompes de recirculation de la tour de pulvérisation, pour la dissolution du réactif et pour la formation du produit de désulfuration des gaz de combustion ;
   un conduit d'entrée (5) pour l'entrée des gaz de combustion dans la tour de pulvérisation ;
   un conduit de sortie (10) pour l'évacuation des gaz de combustion sur la partie supérieure de la tour de pulvérisation ;
   une chambre à zone de pulvérisation située entre le conduit d'entrée (5) et le conduit de sortie (10), comprenant au moins deux bancs de pulvérisation (11-16) dotés d'un ensemble buses de pulvérisation, **caractérisé en ce que**
   le conduit d'entrée (5) pour l'entrée des gaz de combustion dans la tour de pulvérisation est équipé d'une rangée d'au moins deux aubes tournantes plates (1-4) qui sont installées selon un angle de rotation spécifique (a) par rapport à l'orientation du conduit d'entrée (5), l'angle de rotation (a) variant dans une plage de 1° à 10°, fournissant ainsi un profil de vitesse d'entrée en forme conique avec des vitesses de gaz de combustion plus élevées au bas du conduit d'entrée (5) du laveur et des vitesses de gaz de combustion inférieures au sommet du conduit d'entrée (5) du laveur, et pour la majorité des bancs de pulvérisation (11-15), à l'exception du banc de pulvérisation supérieur (16), les buses au niveau des parois du laveur (19) pulvérisent vers le bas et d'autres buses au milieu des bancs de pulvérisation (11-15) pulvérisent vers le haut ainsi que vers le bas ;
   les buses du banc de pulvérisation supérieur (16) pulvérisent vers le bas uniquement.

2. Appareil à tour de pulvérisation selon la revendication 1, **caractérisé en ce que** les buses de pulvérisation au niveau de la paroi du laveur (19) sont de type à cône plein (type 3) et les buses au milieu des bancs de pulvérisation (11-16) sont de type à cône creux (type 1 et type 2).

3. Appareil à tour de pulvérisation selon la revendication 1, **caractérisé en ce que**, pour un agencement de buses de pulvérisation en cercles concentriques, une déviation du flux de gaz de buses de pulvérisation de type à cône plein (type 3) au niveau de la paroi du laveur (19) est contrôlée par les variations de chaque débit de buse de type à cône plein, le nombre de buses de type à cône plein et l'angle de pulvérisation peut être différent du débit des buses de pulvérisation au milieu du banc de pulvérisation (11-16).

4. Appareil à tour de pulvérisation selon la revendication 3, **caractérisé en ce que** l'angle de pulvérisation des buses de pulvérisation de type à cône plein (type 3) au niveau de la paroi du laveur est de préférence de 90° et peut être différent de l'angle de pulvérisation des buses au milieu du banc de pulvérisation (11-16).

5. Appareil à tour de pulvérisation selon la revendication 1, **caractérisé en ce que** les buses de pulvérisation de chaque banc de pulvérisation (11-16) sont disposées en cercles concentriques (41-47) avec une distance variable entre les cercles concentriques adjacents (41-47).

6. Procédé de nettoyage de gaz de combustion pour l'élimination d'oxydes de soufre et d'autres polluants environnementaux associés, le gaz de combustion (G1) s'écoulant vers le haut à travers un laveur de tour de pulvérisation à contre-courant à boucle unique avec des bancs de pulvérisation successifs (11-16) dotés de buses de pulvérisation distribuant une suspension aqueuse de réactif pompée à partir de la cuve à réaction sur la base du laveur, la boue de lavage est collectée dans la cuve à réaction et une partie de celle-ci est pompée pour la déshydratation du sous-produit du procédé, et un réactif frais (S11) est injecté à la demande en cas d'élimination accrue de gaz polluant dans le tuyau d'aspiration de la pompe de recirculation (RP6) alimentant le banc de pulvérisation supérieur (16) ou dans le réservoir de réaction (8) du laveur,
**caractérisé en ce que** le gaz de combustion (G1) s'écoule verticalement vers le haut à travers une zone de pulvérisation constituée de plusieurs bancs de pulvérisation (11-16), pour la majorité des bancs de pulvérisation (11-15), à l'exception du banc de pulvérisation supérieur (16), les buses au niveau des parois du laveur (19) pulvérisent vers le bas et les autres buses au milieu des bancs de pulvérisation (11-15) pulvérisent aussi bien vers le haut que vers le bas et les buses du banc de pulvérisation supérieur (16) pulvérisent vers le bas uniquement, et le gaz de combustion (G1) étant dirigé vers l'intérieur du laveur par l'intermédiaire d'un conduit d'entrée (5) équipé d'une rangée d'au moins deux aubes tournantes plates (1-4) qui sont installées selon un angle de rotation spécifique (a) par rapport à l'orientation du conduit d'entrée (5).

7. Procédé selon la revendication 6, **caractérisé en ce que** l'angle de rotation (a) des aubes tournantes plates (1-4) varie dans une plage de 1 ° à 10°, fournissant ainsi un profil de vitesse d'entrée de forme conique avec des vitesses de gaz de combustion plus élevées au bas du conduit d'entrée (5) du laveur et des vitesses de gaz de combustion inférieures au sommet du conduit d'entrée (5) du laveur.

8. Procédé selon la revendication 6 et 7, **caractérisé en ce que** le réactif frais (S11) est injecté avec le flux d'eau de récupération (S12) du système de déshydratation de sous-produits, en particulier avec retour gravimétrique de la suspension de gypse de débordement d'hydrocyclone (S8).

A—A

FIG. 1a

Fig. 1b

FIG. 2

FIG. 3

Velocity
between spray levels

| 8.000e+000 |
| 7.000e+000 |
| 6.000e+000 |
| 5.000e+000 |
| 4.000e+000 |
| 3.000e+000 |
| 2.000e+000 |
| 1.000e+000 |
| 0.000e+000 |
| -1.000e+000 |
| -2.000e+000 |

$[m\ s^{-1}]$

(a)

(b)

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1629880 B1
- EP 0899001 A1

- US 2015023855 A

**Non-patent literature cited in the description**

- Radian International LLC. Electric Utility Engineer's FGD Manual. Pittsburgh Energy Technology Center, 1996

- **GAO, X. ; HUO, W. ; LUO Z. ; CEN, K.** CFD Simulation with enhancement factors of sulphur dioxide absorption in the spray scrubber. *Journal of Zhejiang University, SCIENCE A,* 2008, vol. 9 (11